# EUROPEAN PATENT SPECIFICATION

(11) **EP 2 229 773 B1**
(45) Date of publication and mention of the grant of the patent: **11.07.2012**
(21) Application number: 08858746.4
(22) Date of filing: 03.11.2008
(51) Int. Cl.: H04N 5/64, H04N 5/44

(54) **A television with sterilizing chamber**
Fernsehgerät mit Sterilisierkammer
Téléviseur avec chambre de stérilisation

(30) Priority: 10.12.2007 TR 200708538
(43) Date of publication of application: 22.09.2010
(73) Proprietor: Arçelik Anonim Sirketi, 34445 Istanbul (TR)
(72) Inventor: CANTÜRK, Ismail Cem, 34524 Istanbul (TR); KASHAN, Ömer, 34524 Istanbul (TR); TÜRKAY, Bilgen Gülsen, 34524 Istanbul (TR); ÖRKÜN, Tevfik, 34524 Istanbul (TR); ÖZYÜKSEL, Emre, Eskisehir (TR)
(86) International application number: PCT/IB2008/054557
(87) International publication number: WO 2009/074901

(56) References cited:
- DE-A1-102004 041 871
- FR-A- 2 762 955
- KR-A- 20050 122 875

## Description

Field of the Invention

The present invention relates to a television comprising a chamber for cleaning the remote control.

Prior Art

Remote controls used with electronic devices are often located at common use areas and used by many different people. For this reason, dust, dirt, bacteria and microorganisms accumulating on the remote control by time pose a threat to the health of the users. Various applications have been developed for clearing remote controls and similar common use objects of bacteria and microorganisms. These applications are generally structures specially produced for cleaning the said objects, or they are solutions which carry out cleaning making use of an external energy source.

The Korean patent document No. KR20050122875, an application within the state of the art, discloses a chamber embedded within the television and used for sterilizing the remote controls against microorganisms and bacteria. In the chamber comprising a photosensitive surface, beams coming from a light source arranged within the chamber and from the external environment are shed on this surface. As a result of the reaction occurring on the surface, the remote control device placed within the chamber is chemically cleared of microbes. The German patent document No. DE102004041871 discloses a remote control for operating theatre, which can be sterilized in an autoclave.

Another problem commonly seen in electronic devices (television, computer, etc.) is the excessive heat arising in electronic circuits and components during operation of the device. In order to prevent the said electronic equipment from getting damaged upon overheating due to this heat emitted by the circuits and components within the device, the heated air should be directed towards outside of the device. For this purpose, structures (ventilation holes, etc.) to facilitate heat transfer and special assemblies to direct the heated air towards outside of the case of the device by means of a fan are formed within the cases of the devices.

Accordingly, assemblies provided in the state of the art for discharging the excessive heat that is released in the electronic equipment during operation of the device and for cleaning the remote controls are designed and operated separately. This causes the production cost and physical volume of the device to increase.

Summary of the Invention

The objective of the present invention is to realize a television which comprises an assembly for sterilizing the remote control thereof against bacteria and microorganisms.

The television realized to fulfill the objective of the present invention and defined in Claim 1 and in its dependent claims, comprises a fan which directs the air whose temperature increases due to the heat released during operation of the television and a chamber where the remote control device is placed and cleaned by being exposed to the said heat. This chamber is accessed by means of a cover which is arranged horizontally or vertically in the inner volume of the case and which is located on any surface of the case. Open-close mechanism of the said cover can be designed to be drawer type, dismountable type, hinged or sliding.

In clearing the remote controls placed within the chamber from microorganisms and bacteria, clearing the remote control from microorganisms and bacteria and discharging the overheated air are performed by means of a single assembly by making use of the heat emitted from the electronic circuits and components within the television device. Thus, as a result of applying the cooling structures comprising fans used in almost all electronic devices, together with a remote control chamber, the process of clearing the remote controls from microorganisms and bacteria is performed by using the excessive heat that arises during operation of the television device, without requiring an additional energy source or cost.

Detailed Description of the Invention

The television realized to fulfill the objective of the present invention is illustrated in the accompanying figures in which,

Figure 1 is the front perspective view of a television comprising a chamber with a drawer type cover.

Figure 2 is the view of the remote control chamber within the case together with the surfaces including a fan or a grate on two sides thereof.

Figure 3 is the view of another embodiment of the inventive television.

Figure 4 is the view of a further embodiment of the inventive television.

The components shown in the figures are numbered as follows:

1. Television

2. Chamber

3. Cover

4. Fan

5. Grate

The inventive television (1) comprises a case; a chamber (2) within the case where the remote control (A) can be placed and which has a cover (3) at the outer surface of the case; a fan (4) which enables the inner heat of the television to be directed towards the chamber (2); and a grate (5) which is formed by the openings provided on the case and which allows the hot air passing through the chamber (2) to exit from the case.

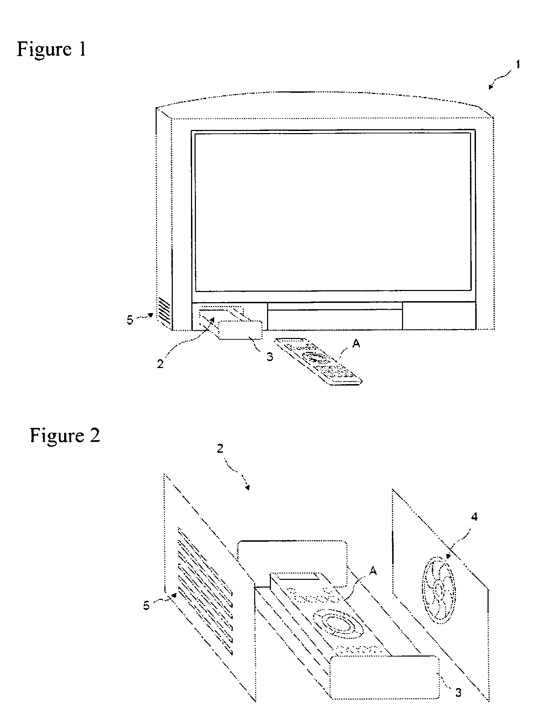

The chamber (2) which is designed to allow horizontal or vertical arrangement of the remote control (A) within the case is preferably a rectangular prism and is located on the front, rear, side or top surface of the case. After the user places the remote control, the cover (3) reduces the heat exchange between the chamber (2) and the external environment. The cover (3) is located on any of the front, rear, side or top surfaces (Figure 1, Figure 3, Figure 4) and it is possible to design it as drawer type, dismountable type, hinged or sliding.

The heat to which the remote control (A) will be exposed with the purpose of cleaning the bacteria and microorganisms on the remote control (A) placed within the chamber (2), is supplied from the idle heat that arises in the circuits and components within the television. For this purpose, the fan (4), whose one face is embedded to the side where the circuits and components that release heat are located within the television and whose other face is embedded to the surface facing the chamber (2), transfers the heat that is released during operation of the television to the chamber (2) and enables it to be discharged from the television (1) via the grate (5). In various embodiments of the invention, the fan (4) is operated automatically when the temperature within the television (1) exceeds a certain level or when the remote control (A) is placed within the chamber (2), or it is operated by a user.

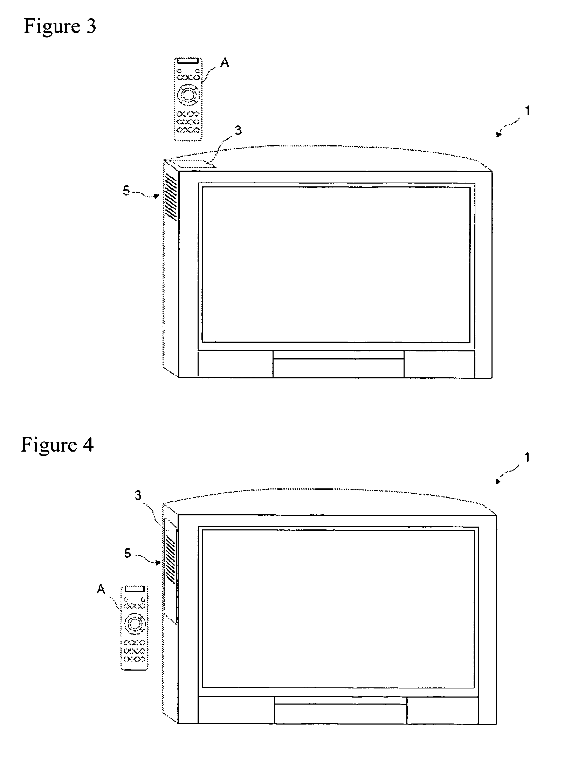

The air directed by the fan (4) to the chamber (2), after contacting the remote control (A) and ensuring that it is cleared of the microorganisms and bacteria thereon, is discharged from the case through a grate (5) which is located on the case and preferably aligned with the fan (4). Thus, while the device placed within the chamber (2) is cleaned, the hot air released during operation of the television (1) is discharged ensuring that overheating of the pieces within the television (1) is prevented. The grate (5) which enables the air directed by the fan (4) to be discharged from the television (1) after passing through the chamber (2), is provided on the television (1) case or cover (3) (Figure 4), and it is comprised of horizontal, vertical or circular linear openings or ventilation holes aligned with the fan (4).

During operation of the television (1), average inner temperature thereof is 55-60°C. However, depending on the design of the television (1) frame and the arrangement of the pieces, this temperature can rise up to 80°C. By means of the hot air transferred to the chamber (2) via a fan (4), these temperatures are also reached within the chamber (2). By placing and keeping the remote control (A) within the said chamber (2) during operation of the television (1) for 30 - 60 minutes, the remote control (A) is cleared of a substantial amount of the microorganisms thereon. A significant amount of the asporogenic bacteria are destroyed under the said temperatures within the said periods of time. For example, in order for the microorganism named influenza, which is effective in emergence and spreading of many diseases, to be destroyed, it is sufficient for it to stay at a medium with a temperature of 55°C for 30 minutes.

Within the framework of this basic concept, it is possible to develop various embodiments of the television (1). The invention is essentially according to the claims and it can not be limited to the examples described herein.

## Claims

1. A television (1) comprising a case; a chamber (2) where the remote control (A) can be placed and which has a cover (3) provided on the outer surface of the case; at least one fan (4) which enables the inner heat of the television to be directed towards the chamber (2); and a grate (5) which is formed by the openings provided on the case and which allows the hot air that is passed through the chamber (2) to exit from the case; **characterized by** a fan (4), which enables the air that it absorbs from the side where the circuits and components that release heat are located, to be transferred to the chamber (2).

2. A television (1) according to Claim 1, **characterized by** a rectangular prism chamber (2) which is located on the front, rear, side or top surface of the case so as to allow horizontal placement of the remote control (A) within the case.

3. A television (1) according to Claim 1, **characterized by** a rectangular prism chamber (2) which is located on the front, rear, side or top surface of the case so as to allow vertical placement of the remote control (A) within the case.

4. A television (1) according to any of the preceding claims, **characterized by** a cover (3) which reduces the heat transfer between the external environment and the chamber (2) and which covers the entrance of the chamber (2).

5. A television (1) according to any of the preceding claims, **characterized by** a fan (4) which starts to operate automatically when the temperature within the television exceeds a certain level or when the remote control (A) is placed within the chamber (2).

6. A television (1) according to Claim 1 to 4, **characterized by** a fan (4) which can be operated or stopped by a user.

7. A television (1) according to Claim 4, **characterized by** a grate (5), which enables the air directed by the fan (4) to the chamber (2) to be discharged from the chamber (2) after it contacts the remote control (A) and ensures that it is cleared of the microorganisms and bacteria thereon, and which is located on the case or cover (3) and comprised of horizontal, vertical or circular linear openings or ventilation holes aligned with the fan (4).

## Patentansprüche

1. Fernsehgerät (1), umfassend ein Gehäuse, eine Kammer (2), in der eine Fernbedienung (A) untergebracht werden kann und die eine Abdeckung (3) aufweist, die an der Außenfläche des Gehäuses vorgesehen ist, wenigstens ein Gebläse (4), das es ermöglicht, die innere Wärme des Fernsehgeräts aus der Kammer (2) zu leiten, und ein Gitter (5), das durch die Öffnungen am Gehäuse ausgebildet ist und das es der heißen Luft, die durch die Kammer (2) strömt, aus dem Gehäuse zu gelangen, **gekennzeichnet durch** ein Gebläse (4), das es der Luft, die es von der Seite, auf der die Schaltkreise und Bauteile, die Wärme freisetzen, angeordnet sind, ermöglicht, in die Kammer (2) übertragen zu werden.

2. Fernsehgerät (1) nach Anspruch 1, **gekennzeichnet durch** eine rechteckige Prismenkammer (2), die an der Vorder-, Rück-, Seiten- oder Oberfläche des Gehäuses angeordnet ist, um eine horizontale Anordnung der Fernbedienung (A) in dem Gehäuse zu ermöglichen.

3. Fernsehgerät (1) nach Anspruch 1, **gekennzeichnet durch** eine rechteckige Prismenkammer (2), die an der Vorder-, Rück-, Seiten- oder Oberfläche des Gehäuses angeordnet ist, um eine vertikale Anordnung der Fernbedienung (A) in dem Gehäuse zu ermöglichen.

4. Fernsehgerät (1) nach einem der vorangehenden Ansprüche, **gekennzeichnet durch** eine Abdeckung (3), die die Wärmeübertragung zwischen der Außenumgebung und der Kammer (2) reduziert und den Eingang der Kammer (2) abdeckt.

5. Fernsehgerät (1) nach einem der vorangehenden Ansprüche, **gekennzeichnet durch** ein Gebläse (4), das automatisch zu arbeiten beginnt, wenn die Temperatur im Fernsehgerät (1) einen bestimmten Pegel übersteigt, oder wenn die Fernbedienung (A) in der Kammer (2) angeordnet wird.

6. Fernsehgerät (1) nach Anspruch 1 bis 4, **gekennzeichnet durch** ein Gebläse (4), das von einem Benutzer betätigt oder angehalten werden kann.

7. Fernsehgerät (1) nach Anspruch 4, **gekennzeichnet durch** ein Gitter (5), das es der Luft, die von dem Gebläse (4) in die Kammer (2) geleitet wird, aus der Kammer (2) abgelassen zu werden, wenn sie in Kontakt mit der Fernbedienung (A) tritt, und sicherstellt, dass diese von Mikroorganismen und Bakterien befreit wird, und das am Gehäuse oder der Abdeckung (3) angeordnet ist und aus horizontalen, vertikalen oder kreisförmig linearen Öffnungen oder Belüftungsöffnungen ausgebildet ist, die an dem Gebläse (4) ausgerichtet sind.

## Revendications

1. Une télévision (1) comprenant un boîtier ; une chambre (2) dans laquelle la télécommande (A) peut être placée et qui a un couvercle (3) situé sur la surface extérieure du boîtier ; au moins un ventilateur (4) qui permet à la chaleur intérieure de la télévision d'être dirigée vers la chambre (2) ; et une grille (5) qui est formée par les ouvertures situées sur le boîtier et qui permet à l'air chaud passant à travers la chambre (2) de quitter le boîtier ; **caractérisée par** un ventilateur (4), qui permet à l'air qu'il absorbe du côté où les circuits et les composants qui dégagent la chaleur sont situés, d'être transféré à la chambre (2).

2. Une télévision (1) selon la Revendication 1, **caractérisée par** une chambre (2) en prisme rectangulaire qui est située sur la surface avant, arrière, latérale ou supérieure du boîtier de manière à permettre le placement horizontal de la télécommande (A) dans le boîtier.

3. Une télévision (1) selon la Revendication 1, **caractérisée par** une chambre (2) en prisme rectangulaire qui est située sur la surface avant, arrière, latérale ou supérieure du boîtier de manière à permettre le placement vertical de la télécommande (A) dans le boîtier.

4. Une télévision (1) selon l'une quelconque des revendications précédentes, **caractérisée par** un couvercle (3) qui réduit le transfert de chaleur entre le milieu extérieur et la chambre (2), et qui couvre l'entrée de la chambre (2).

5. Une télévision (1) selon l'une quelconque des revendications précédentes, **caractérisée par** un ventilateur (4) qui commence à fonctionner automatiquement lorsque la température dans la télévision (1) dépasse un certain niveau ou lorsque la télécommande (A) est placée dans la chambre (2).

6. Une télévision (1) selon les revendications de 1 à 4, **caractérisée par** un ventilateur (4) qui peut être actionné ou arrêté par l'utilisateur.

7. Une télévision (1) selon la Revendication 4, **caractérisée par** une grille (5) qui permet à l'air dirigé par le ventilateur (4) vers la chambre (2) d'être déchargé de la chambre (2) après qu'il touche la télécommande (A) et assure qu'elle est enlevée des micro-organismes et bactéries, et qui est située sur le boîtier ou le couvercle (3) et composée de ouvertures linéaires ou des trous de ventilation horizontaux, verticaux ou circulaires alignés avec le ventilateur (4).
